# EUROPEAN PATENT APPLICATION

(11) **EP 0 753 955 A1**
(43) Date of publication of application: **15.01.1997**
(21) Application number: 96201839.6
(22) Date of filing: 02.07.1996
(51) Int. Cl.: H04M 3/42, H04M 3/54, H04Q 11/04, H04Q 3/545

(54) **Method for coupling a terminal device to a network device, as well as processor means, as well as network-processor means**

(30) Priority: 13.07.1995 NL 1000792
(71) Applicant: Koninklijke PTT Nederland N.V., 2509 CH Den Haag (NL)
(72) Inventor: Levelt, Willem Gerard, 2512 DJ The Hague (NL); Smit, Michel Jean Paul, 2274 JC Voorburg (NL); Pols, Arthur Martinus Adrianus, 2263 HP Leidschendam (NL); Los, Dirk, 2316 XV Leiden (NL)
(74) Representative: van Bommel, Jan Peter

(57) **Abstract**

Known networks, for which the number of telecommunication services to be rendered by way of terminals should be extended, should be provided with intelligent exchanges (SSPs), which are controlled by computers (SCPs), which requires enormous investments and entails time-consuming activities. By coupling a terminal and the network by way of a processor, and by coupling the network to a network processor, with there first of all taking place, prior to a certain service being rendered, a communication between the processor and the network processor before further actions are undertaken, every user who couples his terminal to the network by way of the processor is provided with a greater number of services as soon as said network has been coupled to the network processor. In this case, the intelligence required for the greater number of services is not accommodated in the network as one entirety, but said intelligence is distributed over the network processor and the processor located between the terminal and the network.

## Description

### A. BACKGROUND OF THE INVENTION

The invention relates to a method for coupling a terminal device and a network device, which method comprises the step of
- generating and transmitting, by one of the devices in response to first information to be received, second information in the direction of the other device.

Such a method is of general knowledge and relates to, e.g., a Public Switched Telephone Network or PSTN, or an Integrated Services Digital Network or ISDN.

If, from a terminal-device side, there is desired a coupling to the network device, a user will generally feed the first information to the terminal device in the form of a dialled number. In response thereto, the terminal device generates the second information in the form of a dialling signal, which is transmitted to the network device. The network device then receives said second information in the form of the dialling signal, and subsequently, e.g., sets up a telecommunication connection with a further terminal device which is characterised by said dialling signal. As soon as said telecommunication connection has been set up, the network device generates a ringing signal which is transmitted to said further terminal device and which is transmitted, as a kind of wait-state signal, to the terminal device. When a further user takes up the receiver of the further terminal device, the further terminal device generates a kind of receiver-takeup signal which is detected by the network device and in response whereto the wait-state signal and the ringing signal are terminated.

If, from a network-device side, there is desired a coupling with the terminal device, a still further user will generally feed certain information to a still further terminal device in the form of a further dialled number. In response thereto, the still further terminal device generates the first information in the form of a further dialling signal, which is transmitted to the network device. The network device then receives said first information in the form of the further dialling signal, and subsequently, e.g., sets up a telecommunication connection with the terminal device which is characterised by said further dialling signal. As soon as said telecommunication connection has been set up, the network device generates the second information in the form of a ringing signal which is transmitted to said terminal device and which is transmitted, as a kind of wait-state signal, to the still further terminal device. The terminal device then receives said second information in the form of the ringing signal, and when a user takes up the receiver of the terminal device, the terminal device generates a kind of receiver-takeup signal which is transmitted to the network device, and in response whereto the wait-state signal and the ringing signal are terminated.

Both in the event of the coupling being desired from the terminal-device side and in the event of the coupling being desired from the network-device side, in the above description said coupling is set up with the object of realising a telecommunication connection. Such need not always be the case, of course; generally, a coupling with the network device by a user of a terminal device will be desired in connection with one or more telecommunication services to be rendered to him.

Such a method has the drawback, inter alia, that when the number of telecommunication services to be rendered to users of terminal devices has to be extended, the network device has to be provided with so-called intelligent exchanges (such as Service Switching Points or SSPs), which are controlled by computers (such as Service Control Points or SCPs), which requires enormous investments and entails time-consuming activities. Consequently, installing the intelligent exchanges takes place in phases, as a result of which the greater number of telecommunication services can be offered to the users either in phases or only after installation of the latest intelligent exchange.

### B. SUMMARY OF THE INVENTION

The object of the invention is to provide, inter alia, a method of the type referred to in the preamble, with users of terminal devices being capable of having at their disposal a larger number of services, irrespective of the availability in the network device of intelligent exchanges.

For this purpose, the method according to the invention is characterised in that the terminal device and the network device are capable of being mutually coupled by way of processor means, which network device is further capable of being coupled to network-processor means, and which method comprises the steps of
- generating, by the processor means in response to initiating information to be received and transmitting, by way of the network device to the network-processor means, third information, and
- generating, by the network-processor means in response to the third information, and transmitting, by way of the network device to the processor means, fourth information.

By rendering the terminal device and the network device capable of being mutually coupled by way of the processor means, and by further rendering the network device capable of being coupled to the network-processor means, with the processor means generating the third information in response to initiating information to be received, and transmitting said third information by way of the network device to the network-processor means, and with the network-processor means generating the fourth information in response to the third information, and transmitting said fourth information by way of the network device to the processor means, it is achieved that, both in the event of the coupling being desired from the terminal-device side and in the event of the coupling being desired from the network-device side, first of all a communication takes place between the processor means and the network-processor means before further actions are undertaken (such as, e.g., setting up the telecommunication connection with the further terminal device in the event of the coupling being desired from the terminal-device side and such as, e.g., setting up the telecommunication connection with the terminal device in the event of the coupling being desired from the network-device side). As a result, every user who couples his terminal device to the network device by way of the processor means will have at his disposal a greater number of services, as soon as said network device is coupled to the network-processor means.

The invention is based, inter alia, on the insight that the intelligence required for the larger number of services need not necessarily be provided in the network device, but that one of the options also is to provide said intelligence partly in network-processor means coupled to the network device and partly per user in processor means located between the terminal device and the network device.

In this manner, the problem of the availability of a larger number of services desired by users of terminal devices, independently from the availability of intelligent exchanges in the network device, is solved by first of all having a communication take place between on the one hand the processor means which couple the terminal device of the user to the network device and on the other hand the network-processor means coupled to the network device, before further actions are undertaken. Apart from the fact that coupling the network device to the network-processor means and placing the processor means between the terminal device and the network device do not require enormous investments and do not entail time-consuming activities, in addition the option is created of offering, to individual users, a larger number of services to be determined per individual user.

A first embodiment of the method according to the invention is characterised in that the initiating information and the second information match, at least in part, which second information originates from the terminal device.

By having the second information originating from the terminal device and the initiating information match, at least in part, said method relates to a coupling being desired from the terminal-device side.

A second embodiment of the method according to the invention is characterised in that the method comprises the steps of
- generating and transmitting to the network device, by the processor means in response to the fourth information, fifth information, and
- setting up, by the network device in response to the fifth information, a telecommunication connection between the terminal device and at least one further terminal device.

Since, in this case of a coupling being desired from the terminal-device side, the processor means in response to the fourth information generate the fifth information and transmit it to the network device, and the network device in response to the fifth information sets up the telecommunication connection between the terminal device and at least one further terminal device, it is achieved that a coupling being desired from the terminal-device side between the terminal device and the further terminal device, is set up by way of the network device. The fifth information relates to, e.g., a dialling signal, which characterises the further terminal device and matches, e.g., at least in part, the fourth information, or is derived from at least part of said fourth information, and/or matches, e.g., at least in part, the second information, or derives from at least part of said second information. If the further terminal device is a telephone set, there may subsequently take place, by way of the telecommunication connection thus set up, a telephone call. If, on the other hand, the further terminal device is an answering device or an ordering computer, there may subsequently be put through, by way of the telecommunication connection thus set up, a message or an order. Also, the further terminal device might be, e.g., a videophone, with an audiovisual signal being put through by way of the telecommunication connection set up, and therefore no longer involving a connection which is 100% speech-signal oriented. Furthermore, only video signals might also be transmitted by way of the telecommunication connection thus set up, and/or, e.g., data traffic (such as, e.g., file transfer) might be transmitted by way of the telecommunication connection thus set up. When a number of telecommunication connections is set up between the terminal device and the number of further terminal devices, one of the options of course is that said telecommunication connections differ between themselves to a greater or lesser extent, since, e.g., they are of a different type and/or offer different options (such as, e.g., audio or video).

A third embodiment of the method according to the invention is characterised in that the method comprises the step of
- generating and transmitting to the terminal device, by the processor means in response to the fourth information, sixth information.

Since, in this case of a coupling being desired from the terminal-device side, the processor means in response to the fourth information generate the sixth information and transmit it to the terminal device, it is achieved that a coupling being desired from the terminal-device side between the terminal device and the further terminal device is not set up, e.g., since the terminal device has not been authorised for certain services. The sixth information relates to, e.g., a disabling signal, which indicates that the desired telecommunication connection cannot be set up.

A fourth embodiment of the method according to the invention is characterised in that the initiating information and the second information match, at least in part, which second information originates from the network device.

By having the second information originating from the network device and the initiating information match, at least in part, said method relates to a coupling being desired from the network-device side.

A fifth embodiment of the method according to the invention is characterised in that the method comprises the step of
- generating and transmitting to the network device, by a still further terminal device in response to seventh information to be received, the first information.

Since, in this case of a coupling being desired from the network-device side, the still further terminal device in response to the seventh information to be received generates the first information and transmits it to the network device, it is achieved that a coupling being desired from the network-device side (more in particular, from the still further terminal coupled to the network device) between the still further terminal device and the terminal device may be set up by way of the network device. The seventh information relates to, e.g., certain information to be fed by a still further user to the still further terminal device in the form of a further dialled number. In response thereto, the still further terminal device generates the first information in the form of a further dialling signal, which is transmitted to the network device.

A sixth embodiment of the method according to the invention is characterised in that the method comprises the step of
- generating and transmitting to the network device, by the processor means in response to the fourth information, eighth information.

Since, in this case of a coupling being desired from the network-device side, the processor means in response to the fourth information generate the eighth information and transmit it to the network device, it is achieved that a coupling being desired from the network-device side (more in particular, from the still further terminal coupled to the network device) between the still further terminal device and the terminal device is not set up, e.g., since a user of the terminal device has earlier informed the network-processor means of the fact that he does not desire to be capable of being reached by users of the still further terminal device. The eighth information relates to, e.g., a simulated ringing signal which is then simply and solely transmitted to the still further terminal device, or relates to, e.g., an interrupt command, in response whereto the network device interrupts the connection between the still further terminal device and the network device.

A seventh embodiment of the method according to the invention is characterised in that the method comprises the steps of
- generating and transmitting to the network device, by the processor means in response to the fourth information, ninth information, and
- setting up, by the network device in response to the ninth information, another telecommunication connection between the still further terminal device and at least one other terminal device.

Since, in this case of a coupling being desired from the network-device side, the processor means in response to the fourth information generate the ninth information and transmit it to the network device, and the network device in response to the ninth information sets up the other telecommunication connection(s) between the still further terminal device and the other terminal device(s), it is achieved that a coupling being desired from the terminal-device side (more in particular, from the still further terminal coupled to the network device) between the still further terminal device and the terminal device by way of the network device is not set up as such, but that another coupling between the still further terminal device and the other terminal device(s) is set up, e.g., since a user of the terminal device is temporarily in the vicinity of one or more other terminal devices, and has passed this on to either at least the processor means or at least the network-processor means. One of the options, e.g., also is that the other coupling is set up as a result of the terminal device, e.g., already being busy (occupied), with the network device then being informed, e.g., by the processor means by way of the ninth information, on the desired other coupling.

The eighth embodiment of the method according to the invention is characterised in that the method comprises the steps of
- generating and transmitting to the terminal device, by the processor means in response to the fourth information, tenth information, and
- setting up, by the network device in response to the first information and eleventh information originating from the processor means, a further telecommunication connection between the still further terminal device and the terminal device.

Since, in this case of a coupling being desired from the network-device side, the processor means in response to the fourth information generate the tenth information and transmit it to the terminal device, and the network device in response to the first information and the eleventh information originating from the processor means sets up the further telecommunication connection between the still further terminal device and the terminal device, it is achieved that a coupling being desired from the terminal-device side (more in particular, from the still further terminal coupled to the network device) between the still further terminal device and the terminal device is set up by way of the network device. The tenth information relates to, e.g., a ringing signal. Apart from this, there is possibly further transmitted a kind of wait-state signal to the still further terminal device. The eleventh information is either generated by the processor means and transmitted to the network device, or generated by the terminal device and transmitted by way of the processor means to the network device, in order to indicate to the network device that the further telecommunication connection is desired.

A ninth embodiment of the method according to the invention is characterised in that the method comprises the steps of
- generating and transmitting to the terminal device, by the processor means in response to the fourth information, tenth information,
- generating and transmitting to the network device, by the processor means in response to a threshold-value signal, twelfth information, and
- setting up, by the network device in response to the twelfth information, another telecommunication connection between the still further terminal device and at least one other terminal device.

Since, in this case of a coupling being desired from the network-device side, the processor means in response to the fourth information generate the tenth information and transmit it to the terminal device, and the processor means in response to the threshold-value signal generate the twelfth information and transmit it to the network device, and there is (are) set up, by the network device in response to the twelfth information, the other telecommunication connection(s) between the still further terminal device and the other terminal device(s), it is achieved that a coupling being desired from the terminal-device side (more in particular, from the still further terminal coupled to the network device) between the still further terminal device and the terminal device by way of the network device is not set up as such, but that another coupling between the still further terminal device and the other terminal device(s) is set up, e.g., since a user of the terminal device has not succeeded in taking up the receiver within a certain time interval. For this purpose, e.g., there should be started, in the processor means, a threshold-value mechanism as soon as, e.g., the tenth information has been transmitted, which threshold-value mechanism then, if after some time there has not yet been a reaction from a user of the terminal device, should generate the threshold-value signal. Furthermore, it is of course also possible that the twelfth information is transmitted to the network-processor means, which subsequently in response thereto generate thirteenth information and transmit it to the network device, with the other telecommunication connection(s) being set up only in response to said thirteenth information.

The invention further relates to processor means for coupling a terminal device and a network device, with at least one of the devices being provided with a receiver for receiving first information and being provided with a transmitter for transmitting, in response to the first information, second information in the direction of the other device.

The processor means are characterised in that the network device is capable of being coupled to network-processor means, with the processor means being provided with
- first detection means for detecting at least part of the second information,
- first generation means for generating, in response to at least part of the second information, third information intended for the network-processor means,
- second detection means for detecting at least part of fourth information originating from the network-processor means, and
- second generation means for generating, in response to at least part of the fourth generation, further information intended for at least one of the devices.

The invention still further relates to network-processor means for coupling to a network device coupled to a terminal device, with at least one of the devices being provided with a receiver for receiving first information and being provided with a transmitter for transmitting, in response to the first information, second information in the direction of the other device.

The network-processor means according to the invention are characterised in that the terminal device and the network device are capable of being coupled by way of processor means, which processor means, in response to at least part of the second information, generate third information intended for the network-processor means and which processor means, in response to at least part of fourth information originating from the network-processor means generate further information intended for at least one of the devices, with the network-processor means being provided with
- network detection means for detecting at least part of the third information, and
- network generation means for generating, in response to at least part of the third information, the fourth information intended for the processor means.

### C. REFERENCES

■ NL 1000792(Dutch priority patent application)

All references are considered incorporated in the present application.

### D. EXEMPLARY EMBODIMENT

The invention will be explained in greater detail by reference to an exemplary embodiment shown in the figures. Here:
FIG. 1 shows a telecommunication system comprising processor means and network-processor means to which the method according to the invention may be applied,
FIG. 2 shows processor means for application to the system shown in FIG. 1, and
FIG. 3 shows network-processor means for application to the system shown in FIG. 1.

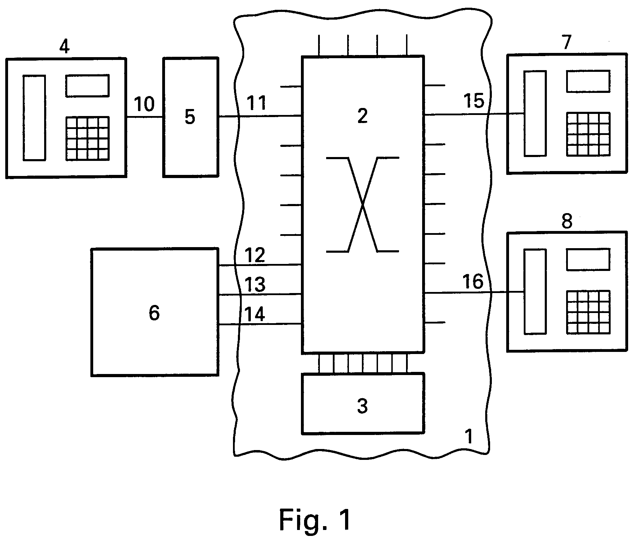

The telecommunication system shown in FIG. 1 according to the invention is provided with a network device 1, a terminal device 4, processor means 5, network-processor means 6, a further terminal device 7 and a still further terminal device 8. Network device 1 comprises a switching matrix 2 and a computer 3 connected thereto. Switching matrix 2 is coupled, by way of a connection 11, to processor means 5, and is coupled, by way of connections 12, 13 and 14, to network-processor means 6, and is coupled, by way of a connection 15, to terminal device 7 and is coupled, by way of a connection 16, to terminal device 8. Processor means 5 are coupled, by way of a connection 10, to terminal device 4.

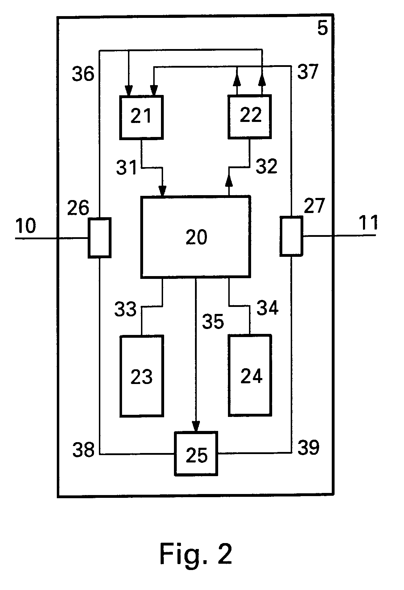

The processor means 5 shown in FIG. 2 are provided with a processor 20, a detector 21, a generator 22, a memory 23, a clock mechanism 24, a switching function 25, a first splitter/combinator 26 and a second splitter/combinator 27. Connection 10 is coupled to a main input/output of splitter/combinator 26, of which a signalling input/output is coupled, by way of connection 36, to a first input of detector 21 and to a first output of generator 22, and of which a data input/output is coupled, by way of a connection 38, to one side of switching function 25. Connection 11 is coupled to a main input/output of splitter/combinator 27, of which a signalling input/output is coupled, by way of a connection 37, to a second input of detector 21 and to a second output of generator 22, and of which a data input/output is coupled, by way of a connection 39, to the other side of switching function 25. An output of detector 21 is coupled, by way of a connection 31, to an input of processor 20, and an input of generator 22 is coupled, by way of a connection 32, to an output of processor 20. Furthermore, memory 23 is coupled, by way of a control connection 33, to processor 20, and clock mechanism 24 is coupled, by way of a control connection 34, to processor 20, and switching function 25 is controlled, by way of a control connection 35, by processor 20.

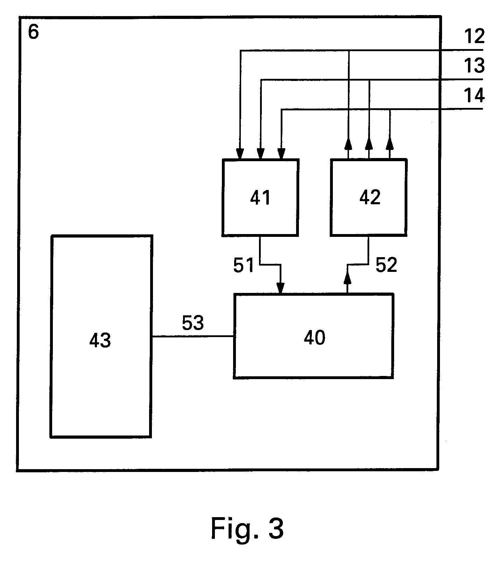

The network-processor means 6 shown in FIG. 3 are provided with a processor 40, a detector 41, a generator 42 and a memory 43. Connection 12 is coupled to a first input of detector 41 and to a first output of generator 42. Connection 13 is coupled to a second input of detector 41 and to a second output of generator 42. Connection 14 is coupled to a third input of detector 41 and to a third output of generator 42. A control output of detector 41 is coupled, by way of a connection 51, to a control input of processor 40, and a control input of generator 42 is coupled, by way of a connection 52, to a control output of processor 40. Furthermore, memory 43 is coupled, by way of a control connection 53, to processor 40.

In the event of a coupling being desired from terminal device 4, the operation of the entirety shown in the three figures is as follows. A user will generally feed first information to terminal device 4 in the form of a dialled number. In response thereto, terminal device 4 generates second information in the form of a dialling signal, which second information is transmitted, by way of connection 10, to processor means 5. Said second information (which, at least in part, matches initiating information required by processor means 5) arrives at the main input/output of splitter/combinator 26, which determines that it concerns signalling information and as a result feeds said second information, by way of the signalling input/output of splitter/combinator 26 and by way of connection 36, to the first input of detector 21. Detector 21 detects said second information and informs processor 20, by way of connection 31, on the arrived second information. Processor 20 subsequently, possibly after consulting memory 23 by way of control connection 33, instructs generator 22 by way of connection 32 to generate third information, which third information is fed, by way of the second output of generator 22 and by way of connection 37, to the signalling input/output of splitter/combinator 27. Splitter/combinator 27 transmits said third information, by way of the main input/output of splitter/combinator 27 and by way of connection 11, to network device 1.

In network device 1, said third information is fed, by way of connection 11, to switching matrix 2, with computer 3 analysing the third information and in response thereto driving switching matrix 2 in such a manner that the third information is transmitted by way of, e.g., connection 13 to network-processor means 6. In network-processor means 6, said third information is then fed, by way of connection 13, to the second input of detector 41, which detects the third information and informs processor 40 accordingly by way of connection 51. Subsequently, processor 40 consults memory 43 by way of control connection 53, after which processor 40 instructs generator 42 by way of connection 52 to generate fourth information, which fourth information is transmitted by way of, e.g., the third output of generator 42 and by way of connection 14 to network device 1. In network device 1, said fourth information is fed, by way of connection 14, to switching matrix 2, with computer 3 analysing the fourth information and in response thereto driving switching matrix 2 in such a manner that the fourth information is transmitted, by way of connection 11, to processor means 5.

In processor means 5, said fourth information arrives at the main input/output of splitter/combinator 27, which determines that it concerns signalling information and as a result feeds said fourth information, by way of the signalling input/output of splitter/combinator 27 and by way of connection 37, to the second input of detector 21. Detector 21 detects said fourth information and informs processor 20, by way of connection 31, on the arrived fourth information. Thus, first of all there takes place a communication between processor means 5 and network-processor means 6, before further actions are undertaken. As a result, every user who couples his terminal device by way of the processor means to the network device, is provided with a greater number of services, as soon as said network device has been coupled to the network-processor means.

A first possible further action might be, e.g., setting up a telecommunication connection with at least, e.g., terminal device 7. In this case, processor 20 in response to the fourth information, possibly after consulting memory 23 by way of control connection 33, instructs generator 22 by way of connection 32 to generate fifth information, which fifth information is fed, by way of the second output of generator 22 and by way of connection 37, to the signalling input/output of splitter/combinator 27. The fifth information relates to, e.g., a dialling signal which characterises terminal device 7, and matches, e.g., at least in part, the fourth information, or derives from at least part of said fourth information, and/or matches, e.g., at least in part, the second information, or derives from at least part of said second information. Splitter/combinator 27 transmits said fifth information, by way of the main input/output of splitter/combinator 27 and by way of connection 11, to network device 1.

In network device 1, said fifth information is fed, by way of connection 11, to switching matrix 2, with computer 3 analysing the fifth information and in response thereto driving switching matrix 2 in such a manner that the telecommunication connection is set up between terminal device 4 and at least terminal device 7. Thus, a coupling being desired from terminal device 4 between terminal device 4 and terminal device 7 is set up by way of network device 1. If terminal device 7 is a telephone set, there may subsequently take place, by way of the telecommunication connection thus set up, a telephone call. If, on the other hand, terminal device 7 is an answering device or an ordering computer, there may subsequently be put through, by way of the telecommunication connection thus set up, a message or an order. Also, terminal device 7 might be, e.g., a videophone, with an audiovisual signal being put through by way of the telecommunication connection set up, and therefore no longer involving a connection which is 100% speech-signal oriented. Furthermore, only video signals might also be transmitted by way of the telecommunication connection thus set up, and/or, e.g., data traffic (such as, e.g., file transfer) might be transmitted by way of the telecommunication connection thus set up. When a number of telecommunication connections is set up between terminal device 4 and at least terminal device 7, one of the options of course is that said telecommunication connections differ between themselves to a greater or lesser extent, since, e.g., they are of a different type and/or offer different options (such as, e.g., audio or video).

When the entirety relates to a so-called ISDN situation (Integrated Services Digital Network), the third, fourth and fifth information might be transmitted by way of a so-called D channel, in which case the telecommunication connection to be set up might run by way of a so-called B channel and is set up only after terminal device 7 has reacted to the fifth information. In this case, the switching function 25 is superfluous since the B channel in question, which is coupled to connection 39 by way of splitter/combinator 27, is only switched on after terminal device 7 has reacted. If, on the other hand, the entirety relates to a so-called PSTN situation (Public Switched Telephone Network), then the third, fourth and fifth information are transmitted, e.g., in the form of DTMF tones (Dual Tone Multi Frequency) by way of regular telephone lines, in which case the telecommunication connection to be set up coincides with the transmission of the fifth information, but has only been set up again once terminal device 7 has reacted. In this case, switching function 25 serves to disable speech prematurely originating from terminal device 4 and, after the fifth information has been transmitted, switching function 25 is brought to conducting state.

A second possible further action might be, e.g., not to set up a telecommunication connection with, e.g., terminal device 7 since, e.g., terminal device 4 has not been authorised for certain services. In this case, processor 20 in response to the fourth information, possibly after consultation of memory 23 by way of control connection 33, instructs generator 22 by way of connection 32 to generate sixth information, which sixth information is fed, by way of the first output of generator 22 and by way of connection 36, to the signalling input/output of splitter/combinator 26, and is transmitted by way of connection 10 to terminal device 4. The sixth information relates to, e.g., a disabling signal which indicates that the desired telecommunication connection cannot be set up.

When the entirety relates to an ISDN situation, the third, fourth and sixth information might be transmitted by way of a D channel. In this case, switching function 25 of course (the telecommunication connection is not set up) is again superfluous. If, on the other hand, the entirety relates to a PSTN situation, the third and fourth information are transmitted, e.g., in the form of DTMF tones, and the sixth information is transmitted, e.g., in the form of a disabling signal by way of regular telephone lines. In this case, switching function 25 serves to disable speech originating from terminal device 4.

In the event of a coupling being desired from network device 1 (more in particular, from the terminal device 8 coupled to network device 1), the operation of the entirety shown in the three figures is as follows. A user will generally feed seventh information to terminal device 8 in the form of a further dialled number. In response thereto, terminal device 8 generates the first information in the form of a further dialling signal which is transmitted, by way of connection 16, to network device 1.

In network device 1, said first information is fed by way of connection 16 to switching matrix 2, with computer 3 analysing said first information and in response thereto driving switching matrix 2 in such a manner that second information is transmitted by way of connection 11 to processor means 5. Said second information (which second information, at least in part, matches initiating information required by processor means 5 and which second information, at least in part, might match the first information) arrives at the main input/output of splitter/combinator 27 which determines that it concerns signalling information and as a result feeds said second information, by way of the signalling input/output of splitter/combinator 27 and by way of connection 37, to the second input of detector 21. Detector 21 detects said second information and informs processor 20, by way of connection 31, on the arrived second information. Processor 20 subsequently, possibly after consulting memory 23 by way of control connection 33, instructs generator 22 by way of connection 32 to generate third information, which third information is fed, by way of the second output of generator 22 and by way of connection 37, to the signalling input/output of splitter/combinator 27. Splitter/combinator 27 transmits said third information, by way of the main input/output of splitter/combinator 27 and by way of connection 11, to network device 1.

In network device 1, said third information is fed, by way of connection 11, to switching matrix 2, with computer 3 analysing the third information and in response thereto driving switching matrix 2 in such a manner that the third information is transmitted by way of, e.g., connection 12 to network-processor means 6. In network-processor means 6, said third information is then fed, by way of connection 12, to the first input of detector 41 which detects the third information and informs processor 40 accordingly by way of connection 51. Subsequently, processor 40 consults memory 43 by way of control connection 53, after which processor 40 instructs generator 42 by way of connection 52 to generate fourth information, which fourth information is transmitted to network device 1 by way of, e.g., the first output of generator 42 and by way of connection 12. In network device 1, said fourth information is fed to switching matrix 2 by way of connection 12, with computer 3 analysing the fourth information and in response thereto driving switching matrix 2 in such a manner that the fourth information is transmitted to processor means 5 by way of connection 11.

In processor means 5, said fourth information arrives at the main input/output of splitter/combinator 27, which determines that it concerns signalling information and as a result feeds said fourth information, by way of the signalling input/output of splitter/combinator 27 and by way of connection 37, to the second input of detector 21. Detector 21 detects said fourth information and informs processor 20, by way of connection 31, on the arrived fourth information. Thus, first of all there takes place a communication between processor means 5 and network-processor means 6, before further actions are undertaken. As a result, every user who couples his terminal device by way of the processor means to the network device is provided with a greater number of services, as soon as said network device has been coupled to the network-processor means.

A first possible further action might be, e.g., not to permit a telecommunication connection being set up with terminal device 4 since, e.g., a user of terminal device 4 has earlier informed network-processor means 6 of the fact that he does not desire to be capable of being reached by users of terminal device 8. In this case, processor 20 in response to the fourth information, possibly after consulting memory 23 by way of control connection 33, instructs generator 22 by way of connection 32 to generate eighth information, which eighth information is fed, by way of the second output of generator 22 and by way of connection 37, to the signalling input/output of splitter/combinator 27. The eighth information relates to, e.g., a simulated ringing signal which is then simply and solely transmitted to terminal device 8, or relates to, e.g., an interrupt command, in response whereto network device 1 interrupts the connection between terminal device 8 and network device 1. Splitter/combinator 27 transmits said eighth information, by way of the main input/output of splitter/combinator 27 and by way of connection 11, to network device 1.

In network device 1, said eighth information is fed by way of connection 11 to switching matrix 2, with computer 3 analysing the eighth information and, in a first case of a simulated ringing signal, drives switching matrix 2 in such a manner that the eighth information is transmitted by way of connection 16 to terminal device 8 and, in a second case of an interrupt command, drives switching matrix 2 in such a manner that the telecommunication connection between terminal device 8 and network device 1 is interrupted. Thus, a coupling being desired from terminal device 8 is not set up between terminal device 8 and terminal device 4.

When the entirety relates to an ISDN situation, the first, second, third, fourth and eighth information might be transmitted by way of a D channel. In this case, switching function 25 of course (the telecommunication connection is not set up) is again superfluous. If, on the other hand, the entirety relates to a PSTN situation, the first, second, third and fourth information are transmitted, e.g., in the form of DTMF tones by way of regular telephone lines, in which case the telecommunication connection to be set up coincides with the transmission of the first and the second information, but is not set up since the eighth information is sent back, e.g., in the form of a disabling signal. In this case, switching function 25, also because the initiative is taken from terminal device 8, prevents the information referred to earlier reaching terminal device 4.

A second possible further action might be, e.g., not to permit a telecommunication connection being set up with terminal device 4, but instead to set up another telecommunication connection with, e.g., terminal device 7, e.g., in a first case since a user of terminal device 4 is temporarily in the vicinity of terminal device 7, and has passed this on to either at least processor means 5 or at least network-processor means 6 and, e.g., in a second case since terminal device 4, e.g., is already busy (occupied), and has passed on to either at least processor means 5 or at least network-processor means 6 that in this case the other telecommunication connection is desired with, e.g., terminal device 7.

In both cases, processor 20 in response to the fourth information, possibly after consulting memory 23 by way of control connection 33, instructs generator 22 by way of connection 32 to generate ninth information, which ninth information is fed, by way of the second output of generator 22 and by way of connection 37, to the signalling input/output of splitter/combinator 27. The ninth information relates to, e.g., an interconnecting signal (such as, in the event of PSTN, a dialling signal and such as, in the event of ISDN, a so-called call-deflection signal) which characterises terminal device 7, and in the first case, e.g., at least partly matches the fourth information, or derives from at least part of said fourth information, and/or, e.g., at least partly matches the third information, or derives from at least part of said third information, or is generated, e.g., by generator 22 after consultation by processor 20 of memory 23, and in the second case is generated, e.g., after consultation by processor 20 of memory 23 by way of control connection 33, or after detection of signals already present between terminal device 4 and network device 1 and flowing by way of connection 38 and by way of connection 39. Splitter/combinator 27 transmits said ninth information, by way of the main input/output of splitter/combinator 27 and by way of connection 11, to network device 1.

In network device 1, said ninth information is fed by way of connection 11 to switching matrix 2, with computer 3 analysing the ninth information and in response thereto driving switching matrix 2 in such a manner that the other telecommunication connection is set up between terminal device 8 and terminal device 7. Thus, a coupling being desired from terminal device 8 is not set up between terminal device 8 and terminal device 4 by way of network device 1, but there is set up another coupling between terminal device 8 and terminal device 7.

When the entirety relates to an ISDN situation, the first, second, third, fourth and ninth information might be transmitted by way of a D channel, in which case the telecommunication connection to be set up might run by way of a so-called B channel and is only set up after terminal device 7 has reacted to the ninth information. In this case, switching function 25 is superfluous since the B channel in question, which is coupled to connection 39 by way of splitter/combinator 27, is only switched on after terminal device 7 has reacted. If the entirety relates to a PSTN situation instead, then the first, second, third, fourth and ninth information are transmitted, e.g., in the form of DTMF tones by way of regular telephone lines, in which case the telecommunication connection to be set up with processor means 5 coincides, by way of a first telephone line, with the transmission of the first and the second information, and the telecommunication connection to be set up with terminal device 7 by way of a second telephone line coincides with the transmission of the ninth information, but only has been set up again once terminal device 7 has reacted. In this case, switching function 25 is not superfluous, since switching function 25 prevents speech from terminal device 4 still ending up on the telecommunication connection set up, and processor means 5 should generate a receiver-takeup signal which is intended for network device 1, and splitter/combinator 27 should dispose of an interconnecting facility for interconnecting the first and the second telephone line.

A third possible further action might be, e.g., to set up a telecommunication connection with terminal device 4. In this case, processor 20 in response to the fourth information, possibly after consulting memory 23 by way of control connection 33, instructs generator 22 by way of connection 32 to generate tenth information, which tenth information is fed, by way of the first output of generator 22 and by way of connection 36, to the signalling input/output of splitter/combinator 26. The tenth information relates to, e.g., a ringing signal which in the event of an ISDN situation is further transmitted, as a kind of wait-state signal, to terminal device 8. As soon as terminal device 4 has reacted to the tenth information, eleventh information is fed, e.g., by way of the second output of generator 22 and by way of connection 37, to the signalling input/output of splitter/combinator 27. In this case, the eleventh information is generated by processor means 5 and transmitted to network device 1, in order to indicate to network device 1 that the telecommunication connection is desired. The eleventh information might also be generated by terminal device 4, however, and might be transmitted, by way of processor means 5 (either by way of connection 10, splitter/combinator 26, connection 36, detector 21, connection 31, processor 20, connection 32, generator 22, connection 37, splitter/combinator 27 and connection 11, or by way of connection 10, splitter/combinator 26, connection 38, switching function 25, connection 39, splitter/combinator 27 and connection 11) to network device 1.

In network device 1, said eleventh information is fed, by way of connection 11, to switching matrix 2, with computer 3 analysing the eleventh information and in response thereto driving switching matrix 2 in such a manner that the telecommunication connection is set up between terminal device 8 and terminal device 4.

When the entirety relates to an ISDN situation, the first, second, third, fourth and eleventh information might be transmitted by way of a D channel, in which case the telecommunication connection to be set up might run by way of a so-called B channel and is only set up after terminal device 4 has reacted to the tenth information. In this case, switching function 25 is superfluous, since the B channel in question, which is coupled to connection 39 by way of splitter/combinator 27, is switched on only after the eleventh information has arrived at network device 1. If the entirety relates to a PSTN situation instead, then the first, second, third and fourth information are transmitted, e.g., in the form of DTMF tones, and the tenth information is transmitted in the form of a ringing signal and the eleventh information is transmitted in the form of a receiver-takeup signal by way of regular telephone lines, in which case the telecommunication connection to be set up coincides with the transmission of the first and the second and the tenth information, but has only been set up again once terminal device 4 has reacted. In this case, switching function 25 is not superfluous, since switching function 25 prevents speech being prematurely put through from terminal device 4.

A fourth possible further action might be, e.g., to try and set up a telecommunication connection with terminal device 4 and, if such does not succeed within a certain time interval, to set up another telecommunication connection between terminal device 8 and, e.g., terminal device 7, e.g., since a user of terminal device 4 has not succeeded in taking up the receiver within the certain time interval. In this case, processor 20 in response to the fourth information, possibly after consulting memory 23 by way of control connection 33, instructs generator 22 by way of connection 32 to generate tenth information, which tenth information is fed, by way of the first output of generator 22 and by way of connection 36, to the signalling input/output of splitter/combinator 26. The tenth information relates to, e.g., a ringing signal which, in the event of an ISDN situation, is further transmitted to terminal device 8 as a kind of wait-state signal. At the same time, processor 20 by way of control connection 34 instructs clock mechanism 24, after the certain time interval has elapsed to generate a threshold-value signal and to feed it, by way of control connection 34, to processor 20. During the certain time interval, processor 20 verifies whether a user of terminal device 4 has already taken the receiver from the hook, which might be determined by way of detector 21, which is capable of detecting a so-called receiver-off-the-hook signal. As soon as processor 20 receives the threshold-value signal by way of control connection 34 and, possibly after consulting memory 23 by way of control connection 33, it has not yet turned out that the user of terminal device 4 has reacted to the ringing signal, processor 20 instructs generator 22 by way of connection 32 to generate twelfth information, which twelfth information is fed, by way of the second output of generator 22 and by way of connection 37, to the signalling input/output of splitter/combinator 27. The twelfth information relates to, e.g., a dialling signal which characterises terminal device 7 and, e.g., at least partly matches the fourth information, or derives from at least part of said fourth information, and/or, e.g., at least partly matches the third information, or derives from at least part of said third information, or is generated after consultation by processor 20 of memory 23 by way of control connection 33 and possible combining with the third and/or fourth information. Splitter/combinator 27 transmits said twelfth information by way of the main input/output of splitter/combinator 27 and by way of connection 11 to network device 1.

In network device 1, said twelfth information is fed, by way of connection 11, to switching matrix 2, with computer 3 analysing the twelfth information and in response thereto driving switching matrix 2 in such a manner that the other telecommunication connection is set up between terminal device 8 and terminal device 7. Thus, a coupling being desired from terminal device 8 is not set up between terminal device 8 and terminal device 4 by way of network device 1, since the user of terminal device 4 has not reacted in time, but another coupling is set up between terminal device 8 and terminal device 7.

When the entirety relates to an ISDN situation, the first, second, third, fourth and twelfth information might be transmitted by way of a D channel, in which case the telecommunication connection to be set up might run by way of a so-called B channel, and is set up only after terminal device 7 has reacted to the twelfth information. In this case, switching function 25 is superfluous since the B channel in question, which is coupled to connection 39 by way of splitter/combinator 27, is switched on only after terminal device 7 has reacted. If the entirety relates to a PSTN situation instead, then the first, second, third, fourth and twelfth information are transmitted, e.g., in the form of DTMF tones, by way of regular telephone lines, in which case the telecommunication connection to be set up with processor means 5 by way of a first telephone line coincides with the transmission of the first and the second information, and the telecommunication connection to be set up with terminal device 7 by way of a second telephone line coincides with the transmission of the twelfth information, but has only been set up again once terminal device 7 has reacted. In this case, switching function 25 is not superfluous since switching function 25 prevents speech from terminal device 4 still ending up on the telecommunication connection set up, and processor means 5 should generate a receiver-takeup signal which is intended for network device 1, and splitter/combinator 27 should dispose of an interconnecting facility for interconnecting the first and the second telephone line.

The invention additionally relates to processor means (5) for coupling a terminal device (4) and a network device (1), with at least one of the devices (at least 1 or at least 4) being provided with a receiver for receiving first information, and being provided with a transmitter for transmitting, in response to the first information, second information in the direction of the other device, characterised in that the network device (1) is capable of being coupled to network-processor means (6), with the processor means (5) being provided with
- first detection means (21, 20) for detecting at least part of the second information,
- first generation means (22, 20) for generating, in response to at least part of the second information, third information intended for the network-processor means (6),
- second detection means (21, 20) for detecting at least part of fourth information originating from the network-processor means (6), and
- second generation means (22, 20) for generating, in response to at least part of the fourth information, further information intended for at least one of the devices (at least 1 or at least 4).

The invention additionally relates to network-processor means (6) for coupling to a network device (1) coupled to a terminal device (4), with at least one of the devices (at least 1 or at least 4) being provided with a receiver for receiving first information, and being provided with a transmitter for, in response to the first information, transmitting second information in the direction of the other device, characterised in that the terminal device (4) and the network device (1) are capable of being coupled by way of processor means (5), which processor means (5), in response to at least part of the second information, generate third information intended for the network-processor means (6) and which processor means (5), in response to at least part of fourth information originating from the network-processor means (6), generate further information intended for at least one of the devices (at least 1 or at least 4), with the network-processor means (6) being provided with
- network detection means (41, 40) for detecting at least part of the third information, and
- network generation means (42, 40) for, in response to at least part of the third information, generating the fourth information intended for the processor means (5).

Splitter/combinator 26 and splitter/combinator 27 are circuits known to those skilled in the art which, in an ISDN situation, are capable of distinguishing the signalling signals arriving and to be transmitted by way of a D channel from the data signals arriving and to be transmitted by way of a B channel. In a PSTN situation, splitter/combinator 26 is, e.g., an interconnection, while splitter/combinator 27 should offer the possibility of mutually interconnecting two regular telephone lines which then together form connection 11. Since switching function 25 is available, it is prevented that certain information is unjustly transmitted from terminal device 4 to network device 1 and vice versa.

In an ISDN situation, connection 11 is therefore, e.g., a so-called 2B+D connection, comprising two data channels of 64 kbit/s each and one signalling channel of 16 kbit/s. In a PSTN situation, connection 11 might comprise two regular telephone lines, with the third and the fourth information (and possibly the second information) being transmitted by way of a first telephone line, and with the eighth, ninth, eleventh and twelfth information being transmitted by way of a second telephone line.

## Claims

1. Method for coupling a terminal device and a network device, which method comprises the step of
- generating and transmitting, by one of the devices in response to first information to be received, second information in the direction of the other device,
characterised in that the terminal device and the network device are capable of being mutually coupled by way of processor means, which network device is further capable of being coupled to network-processor means, and which method comprises the steps of
- generating, by the processor means in response to initiating information to be received, and transmitting by way of the network device to the network-processor means, third information, and
- generating, by the network-processor means in response to the third information, and transmitting by way of the network device to the processor means, fourth information.

2. Method according to claim 1, characterised in that the initiating information and the second information match at least partly, which second information originates from the terminal device.

3. Method according to claim 2, characterised in that the method comprises the steps of
- generating and transmitting to the network device, by the processor means in response to the fourth information, fifth information, and
- setting up, by the network device in response to the fifth information, a telecommunication connection between the terminal device and at least one further terminal device.

4. Method according to claim 2, characterised in that the method comprises the step of
- generating and transmitting to the terminal device, by the processor means in response to the fourth information, sixth information.

5. Method according to claim 1, characterised in that the initiating information and the second information match at least partly, which second information originates from the network device.

6. Method according to claim 5, characterised in that the method comprises the step of
- generating and transmitting to the network device, by a still further terminal device in response to seventh information to be received, the first information.

7. Method according to claim 6, characterised in that the method comprises the step of
- generating and transmitting to the network device, by the processor means in response to the fourth information, eighth information.

8. Method according to claim 6, characterised in that the method comprises the steps of
- generating and transmitting to the network device, by the processor means in response to the fouth information, ninth information, and
- setting up, by the network device in response to the ninth information, another telecommunication connection between the still further terminal device and at least one other terminal device.

9. Method according to claim 6, characterised in that the method comprises the steps of
- generating and transmitting to the terminal device, by the processor means in response to the fourth information, tenth information, and
- setting up, by the network device in response to the first information and eleventh information originating from the processor means, a further telecommunication connection between the still further terminal device and the terminal device.

10. Method according to claim 6, characterised in that the method comprises the steps of
- generating and transmitting to the terminal device, by the processor means in response to the fourth information, tenth information,
- generating and transmitting to the network device, by the processor means in response to a threshold-value signal, twelfth information, and
- setting up, by the network device in response to the twelfth information, another telecommunication connection between the still further terminal device and at least one other terminal device.

11. Processor means for coupling a terminal device and a network device, with at least one of the devices being provided with a receiver for receiving first information, and being provided with a transmitter for transmitting, in response to the first information, second information in the direction of the other device, characterised in that the network device is capable of being coupled to network-processor means, with the processor means being provided with
- first detection means for detecting at least part of the second information,
- first generation means for generating, in response to at least part of the second information, third information intended for the network-processor means,
- second detection means for detecting at least part of fourth information originating from the network-processor means, and
- second generation means for generating, in response to at least part of the fourth information, further information intended for at least one of the devices.

12. Network-processor means for coupling to a network device coupled to a terminal device, with at least one of the devices being provided with a receiver for receiving first information, and being provided with a transmitter for, in response to the first information, transmitting second information in the direction of the other device, characterised in that the terminal device and the network device are capable of being coupled by way of processor means, which processor means, in response to at least part of the second information, generate third information intended for the network-processor means and which processor means, in response to at least part of fourth information originating from the network-processor means, generate further information intended for at least one of the devices, with the network-processor means being provided with
- network detection means for detecting at least part of the third information, and
- network generation means for, in response to at least part of the third information, generating the fourth information intended for the processor means.
